# EUROPEAN PATENT APPLICATION

(11) **EP 4 832 644 A1**
(43) Date of publication of application: **28.10.2026**
(21) Application number: 24906266.2
(22) Date of filing: 13.12.2024
(51) Int. Cl.: H04W 74/0816

(54) **COMMUNICATION METHOD AND RELATED APPARATUS**

(30) Priority: 22.12.2023 CN 202311793422
(71) Applicant: Huawei Technologies Co., Ltd., Shenzhen, Guangdong 518129 (CN)
(72) Inventor: LI, Yanchun, Shenzhen, Guangdong 518129 (CN)
(74) Representative: Huawei European IPR
(86) International application number: PCT/CN2024/139311
(87) International publication number: WO 2025/130785

(57) **Abstract**

A communication method and a related apparatus are provided. The method may be applied to a wireless local area network system that supports IEEE 802.11ax next-generation Wi-Fi protocols such as 802.11be, Wi-Fi 7, or EHT, as well as 802.11be next-generation Wi-Fi protocols, Wi-Fi 8, and other 802.11 series protocols, and may also be applied to a UWB-based wireless personal area network system and a sensing (sensing) system. The method includes: A first device receives first information from a second device on a first channel, where the first information is used to trigger the first device to send second information; the first device sends the second information, where the second information indicates that the first device has a transmission requirement on a second channel; and the first device communicates with a third device on the second channel, where the third device is a device associated with the first device. The solutions provided in embodiments of this application help improve communication performance.

## Description

This application claims priority to Chinese Patent Application No. 202311793422.4, filed with the China National Intellectual Property Administration on December 22, 2023 and entitled "COMMUNICATION METHOD AND RELATED APPARATUS", which is incorporated herein by reference in its entirety.

### TECHNICAL FIELD

This application relates to the field of wireless communication technologies, and in particular, to a communication method and a related apparatus.

### BACKGROUND

The Institute of Electrical and Electronics Engineers (institute of electrical and electronics engineers, IEEE) 802.11 is one of the current mainstream wireless access standards and is widely applied. The IEEE 802.11a standard supports only a bandwidth of 20 MHz, and the bandwidth has continuously increased in a subsequent standard evolution process. The 802.11n standard supports a maximum bandwidth of 40 MHz, and the 802.11ac/ax standard supports a maximum bandwidth of 160 (80+80) MHz. To ensure backward compatibility in the standard evolution process, regardless of a bandwidth, there is a unique primary 20MHz channel, and when data is sent by using any bandwidth, the primary 20MHz channel needs to be included. This leads to a problem: When the unique primary 20MHz channel is busy, all other idle secondary channels (or referred to as non-primary channels) cannot be used, reducing system efficiency. Based on this, related technologies provide a solution in which switching from a primary channel to a secondary channel may be performed for channel access when the primary channel is busy. However, in the solution, there may be a problem of inconsistent understanding of primary and secondary channel switching on an access point (access point, AP) side and a station (station, STA) side. For example, it is assumed that STA1 is a transmission target user of AP1, and STA1 is a hidden node of AP2 (that is, STA1 cannot receive transmission of AP2). As a result, only AP1 can detect that the primary channel is busy and switch to the secondary channel, but STA1 cannot detect that the primary channel is busy, and therefore cannot be triggered to switch to the secondary channel. Consequently, transmission between AP1 and STA1 is missed.

### SUMMARY

Embodiments of this application provide a communication method and a related apparatus, to help improve communication performance.

The following describes this application from different aspects. It should be understood that the following implementations and beneficial effects of different aspects may be mutually referenced.

According to a first aspect, this application provides a communication method. The method is applied to a first device. The first device may be the first device, or may be a module or a chip in the first device. For example, the first device may be AP1. The method includes:
receiving first information from a second device on a first channel, where the first information is used to trigger the first device to send second information;
sending the second information, where the second information indicates that the first device has a transmission requirement on a second channel, and the first channel and the second channel do not overlap; and
communicating with a third device on the second channel, where the third device is a device associated with the first device.

In this embodiment of this application, the second device that successfully preempts a channel provides the first device with an opportunity for the first device to declare that the first device has the transmission requirement on the second channel (that is, a non-primary channel) (that is, provides the first device with an opportunity for sending the second information), so that the third device associated with the first device can synchronously switch to the second channel with the first device for transmission based on the received second information. This can resolve a problem of inconsistent understanding of channel switching on a first device side and a third device side, and help improve communication reliability/communication performance.

In a possible implementation, the first information further includes information indicating the first channel. In other words, the second device may further declare, to a peripheral device, a channel used by the second device, that is, the first channel.

In a possible implementation, the sending the second information includes:
sending the second information on the first channel and the second channel; and
sending the second information on the second channel of a first link and on a second link, where the first link and the second link are included in multiple links between the first device and the third device.

In this implementation, the first device may specifically send the second information on the first channel and the second channel, or the first device having a multi-link capability may send the second information on the second channel of the first link and on the second link, to declare that the first device has the transmission requirement on the second channel (that is, the non-primary channel), so that the third device that receives the second information can synchronously switch to the second channel with the first device for transmission based on the received second information, and further has a function of notifying another device unrelated to the first device not to preempt the second channel.

In a possible implementation, the second information further indicates one or more of the following information:
identification information of the second channel, channel occupancy time of the second channel, or a transmission participant corresponding to the second channel.

In this implementation, the first device may further indicate a specified channel, specified time, and/or a specified transmission participant by using the second information. For example, the second information may further indicate the specified channel, the specified time, and the specified transmission participant. In this way, only the specified transmission participant can communicate with the first device on the specified channel at the specified time, which helps improve flexibility of the solution.

In a possible implementation, one or more of identification information of the second channel, channel occupancy time of the second channel, or a transmission participant corresponding to the second channel are predefined in a protocol.

In this implementation, the specified channel, the specified time, and/or the specified transmission participant may not be indicated by using the second information, but may be predefined in a protocol, or may be preconfigured, and is not limited. This helps reduce transmission overheads.

In a possible implementation, before the receiving the first information from the second device on the first channel, the method further includes:
sending third information to the second device, where the third information indicates a capability of the first device to support switching from the first channel to the second channel for transmission.

In this implementation, the first device may also send, to the second device in advance, the capability of the first device to switch from the first channel to the second channel for transmission. Therefore, if the second device successfully preempts the channel subsequently, the second device may send the first information before a TXOP of the second device ends, where the first information is used to trigger the first device to send the second information.

In a possible implementation, the third information further indicates one or more of the following information:
at least one second channel supported by the first device, or time information for the first device to support switching from the first channel to the second channel for transmission.

In this implementation, the first device may further notify the second device of one or more second channels supported by the first device and/or the time information for supporting channel switching for transmission, so that the second device can send the first information when determining that time is sufficient and/or a bandwidth is sufficient. This helps reduce transmission overheads.

In a possible implementation, the sending the second information includes:
after receiving the first information, waiting for duration of a short interframe space SIFS and then sending the second information.

In this implementation, after receiving the first information, the first device waits for the duration of the SIFS and then sends the second information, so that an information frame exchange procedure can continue, to effectively avoid a conflict.

In a possible implementation, the communicating with the third device on the second channel includes:
switching from the first channel to the second channel to communicate with the third device.

In a possible implementation, the method further includes:
sending fourth information to the second device, where the fourth information is used to trigger the second device to send the first information.

Optionally, a type of a frame used to carry the first information/second information/third information/fourth information may be a request to send (request to send, RTS) frame, a clear to send (clear to send, CTS) frame, a trigger (Trigger) frame, a multi-AP trigger frame, another type of frame, or the like in the 802.11 protocol. Optionally, the second information is used as an example, and a frame header of a frame used to carry the second information may include an identifier of the first device and channel occupation time of the first device for the second channel. The channel occupancy time of the first device for the second channel may be the same as remaining time of channel occupancy time of the second device for the first channel. Alternatively, the channel occupancy time of the first device for the second channel may be shorter than or equal to remaining time of channel occupancy time of the second device for the first channel. Optionally, the channel occupancy time may be represented by a network allocation vector (network allocation vector, NAV).

According to a second aspect, this application provides a communication method. The method is applied to a second device. The second device may be the second device, or may be a module or a chip in the second device. For example, the second device may be AP2. The method includes:
determining first information; and
sending the first information to a first device on a first channel, where the first information is used to trigger the first device to send second information.

In a possible implementation, the method further includes:
receiving the second information, where the second information indicates that the first device has a transmission requirement on a second channel, and the first channel and the second channel do not overlap.

In a possible implementation, the method further includes:
communicating with a fourth device on the first channel when the second information is not received within a point coordination function interframe space PIFS after the first information is sent, where the fourth device is a device associated with the second device.

In this implementation, a solution in which after sending the first information, the second device reserves a maximum of time of a PIFS for the first device to allow the first device to send the second information is provided. If the second device does not receive the second information from the first device within the PIFS, the second device may communicate with the fourth device on the first channel. This helps improve system efficiency.

In a possible implementation, the first information further includes information indicating the first channel.

In a possible implementation, the receiving the second information includes:
receiving the second information on the first channel.

In a possible implementation, the second information further indicates one or more of the following information:
identification information of the second channel, channel occupancy time of the second channel, or a transmission participant corresponding to the second channel.

In a possible implementation, one or more of identification information of the second channel, channel occupancy time of the second channel, or a transmission participant corresponding to the second channel are predefined in a protocol.

In a possible implementation, before the sending the first information to the first device on the first channel, the method further includes:
receiving third information from the first device, where the third information indicates a capability of the first device to support switching from the first channel to the second channel for transmission.

In a possible implementation, the third information further indicates one or more of the following information:
at least one second channel supported by the first device, or time information for the first device to support switching from the first channel to the second channel for transmission.

In a possible implementation, the method further includes:
receiving fourth information from the first device, where the fourth information is used to trigger the second device to send the first information.

According to a third aspect, this application provides a communication apparatus. The communication apparatus may be a first device, or may be a module or a chip in the first device. The communication apparatus includes:
a transceiver unit, configured to receive first information from a second device on a first channel, where the first information is used to trigger the first device to send second information.

The transceiver unit is configured to send the second information, where the second information indicates that the first device has a transmission requirement on a second channel, and the first channel and the second channel do not overlap.

The transceiver unit is configured to communicate with a third device on the second channel, where the third device is a device associated with the first device.

In a possible implementation, the first information further includes information indicating the first channel.

In a possible implementation, when sending the second information, the transceiver unit is specifically configured to:
send the second information on the first channel and the second channel; and
send the second information on the second channel of a first link and on a second link, where the first link and the second link are included in multiple links between the first device and the third device.

In a possible implementation, the second information further indicates one or more of the following information:
identification information of the second channel, channel occupancy time of the second channel, or a transmission participant corresponding to the second channel.

In a possible implementation, one or more of identification information of the second channel, channel occupancy time of the second channel, or a transmission participant corresponding to the second channel are predefined in a protocol.

In a possible implementation, before receiving the first information from the second device on the first channel, the transceiver unit is further configured to:
send third information to the second device, where the third information indicates a capability of the first device to support switching from the first channel to the second channel for transmission.

In a possible implementation, the third information further indicates one or more of the following information:
at least one second channel supported by the first device, or time information for the first device to support switching from the first channel to the second channel for transmission.

In a possible implementation, when sending the second information, the transceiver unit is specifically configured to:
after receiving the first information, wait for duration of a short interframe space SIFS and then send the second information.

In a possible implementation, when communicating with the third device on the second channel, the transceiver unit is specifically configured to:
switch from the first channel to the second channel to communicate with the third device.

In a possible implementation, the transceiver unit is further configured to:
send fourth information to the second device, where the fourth information is used to trigger the second device to send the first information.

According to a fourth aspect, this application provides a communication apparatus. The communication apparatus may be a second device, or may be a module or a chip in the second device. The communication apparatus includes:
a processing unit, configured to determine first information; and
a transceiver unit, configured to send the first information to a first device on a first channel, where the first information is used to trigger the first device to send second information.

In a possible implementation, the transceiver unit is further configured to:
receive the second information, where the second information indicates that the first device has a transmission requirement on a second channel, and the first channel and the second channel do not overlap.

In a possible implementation, the transceiver unit is further configured to:
communicate with a fourth device on the first channel when the second information is not received within a point coordination function interframe space PIFS after the first information is sent, where the fourth device is a device associated with the second device.

In a possible implementation, the first information further includes information indicating the first channel.

In a possible implementation, when receiving the second information, the transceiver unit is specifically configured to:
receive the second information on the first channel.

In a possible implementation, the second information further indicates one or more of the following information:
identification information of the second channel, channel occupancy time of the second channel, or a transmission participant corresponding to the second channel.

In a possible implementation, one or more of identification information of the second channel, channel occupancy time of the second channel, or a transmission participant corresponding to the second channel are predefined in a protocol.

In a possible implementation, before sending the first information to the first device on the first channel, the transceiver unit is further configured to:
receive third information from the first device, where the third information indicates a capability of the first device to support switching from the first channel to the second channel for transmission.

In a possible implementation, the third information further indicates one or more of the following information:
at least one second channel supported by the first device, or time information for the first device to support switching from the first channel to the second channel for transmission.

In a possible implementation, the transceiver unit is further configured to:
receive fourth information from the first device, where the fourth information is used to trigger the second device to send the first information.

According to a fifth aspect, this application provides a communication apparatus. The communication apparatus includes a processor, configured to perform the method in the first aspect or the second aspect, or the method in any possible implementation of the first aspect or the second aspect. Alternatively, the processor is configured to execute a program stored in a memory. When the program is executed, the method in the first aspect, the second aspect, or any possible implementation of the first aspect or the second aspect is performed.

With reference to the fifth aspect, in a possible implementation, the memory is located outside the communication apparatus.

With reference to the fifth aspect, in a possible implementation, the memory is located inside the communication apparatus.

In this application, the processor and the memory may alternatively be integrated into one component. In other words, the processor and the memory may alternatively be integrated together.

With reference to the fifth aspect, in a possible implementation, the communication apparatus further includes a transceiver, and the transceiver is configured to send or receive information.

According to a sixth aspect, an embodiment of this application provides a communication apparatus. The communication apparatus may be implemented in a form of a chip. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the method in the first aspect or the second aspect, or the method in any possible implementation of the first aspect or the second aspect by using a logic circuit or by executing code instructions.

According to a seventh aspect, this application provides a computer-readable storage medium. The storage medium stores a computer program or instructions. When the computer program or the instructions are executed by a computer, the method in the first aspect or the second aspect, or the method in any possible implementation of the first aspect or the second aspect is implemented.

According to an eighth aspect, this application provides a computer program product. When a computer reads and executes the computer program product, the computer is enabled to perform the method in the first aspect or the second aspect, or the method in any possible implementation of the first aspect or the second aspect.

According to a ninth aspect, this application provides a communication system. The communication system may include a first device and a second device. The first device is configured to perform the method in the first aspect or any possible implementation of the first aspect, and the second device is configured to perform the method in the second aspect or any possible implementation of the second aspect.

### BRIEF DESCRIPTION OF DRAWINGS

FIG. 1 is a diagram of a system architecture of a wireless local area network according to an embodiment of this application;
FIG. 2 is a diagram of another system architecture of a wireless local area network according to an embodiment of this application;
FIG. 3 is a diagram of a structure of an access point according to an embodiment of this application;
FIG. 4 is a diagram of a structure of a station according to an embodiment of this application;
FIG. 5 is a diagram of a 320MHz channel according to an embodiment of this application;
FIG. 6 is a diagram of a scenario in which an AP side and a STA side have inconsistent understanding of primary and secondary channel switching according to an embodiment of this application;
FIG. 7 is a schematic flowchart of a communication method according to an embodiment of this application;
FIG. 8 is a diagram of a communication scenario according to an embodiment of this application;
FIG. 9 is a diagram of another common scenario according to an embodiment of this application;
FIG. 10 is another schematic flowchart of a communication method according to an embodiment of this application;
FIG. 11a to FIG. 11d are diagrams of still another common scenario according to an embodiment of this application;
FIG. 12 is a diagram of a structure of a communication apparatus according to an embodiment of this application;
FIG. 13 is a diagram of another structure of a communication apparatus according to an embodiment of this application; and
FIG. 14 is a diagram of still another structure of a communication apparatus according to an embodiment of this application.

### DESCRIPTION OF EMBODIMENTS

The following clearly and completely describes the technical solutions in embodiments of this application with reference to the accompanying drawings in embodiments of this application.

In descriptions of this application, "first", "second", and the like are merely intended to distinguish between different objects but do not indicate a particular order. In addition, unless otherwise specified, "/" represents "or". For example, A/B may represent A or B. The term "and/or" in this specification describes only an association relationship between associated objects and indicates that there may be three relationships. For example, A and/or B may represent the following three cases: Only A exists, both A and B exist, and only B exists. In addition, "at least one" means one or more, and "multiple" means two or more. At least one of the following items (pieces) or a similar expression thereof indicates any combination of these items, including a single item (piece) or any combination of multiple items (pieces). For example, at least one of a, b, or c may represent a, b, c, a and b, a and c, b and c, or a, b, and c, where a, b, and c each may be singular or plural.

Terms "include", "have", and any variants thereof are intended to cover non-exclusive inclusion. For example, processes, methods, systems, products, devices, or the like that include a series of steps or units are not limited to listed steps or units, but optionally further include steps, units, or the like that are not listed, or optionally further include other steps or units inherent to the processes, methods, products, devices, or the like.

In this application, the term "example" or "for example" is used to represent giving an example, an illustration, or a description. Any embodiment or design scheme described as "example", "such as" or "for example" in this application should not be explained as being more preferred or having more advantages than another embodiment or design scheme. Exactly, use of the word "example", "such as", "for example", or the like is intended to present a related concept in a specific manner.

It should be understood that, in this application, "when", "if", and "provided that" all mean that an apparatus performs corresponding processing in an objective situation, and are not intended to limit time. The terms do not mean that the apparatus is required to perform a determining action during implementation, and do not mean any other limitation.

In this application, unless otherwise specified, an element indicated in a singular form is intended to indicate "one or more", but does not indicate "one and only one".

It may be understood that in embodiments of this application, "B corresponding to A" indicates that there is a correspondence between A and B, and B may be determined based on A. Determining B based on A does not mean that B is determined based only on A, and B may alternatively be determined based on A and/or other information.

To better understand embodiments of this application, the following first describes a system architecture in embodiments of this application.

The technical solutions in embodiments of this application may be applied to various communication systems, for example, a 5th generation (5th generation, 5G) system such as a long term evolution (long term evolution, LTE) system, an LTE frequency division duplex (frequency division duplex, FDD) system, an LTE time division duplex (time division duplex, TDD) system, and a new radio (new radio, NR) system, a system evolved after 5G such as a 6th generation (6th generation, 6G) system, and a wireless local area network (wireless local area network, WLAN), and may also be applied to an ultra-wideband (ultra-wideband, UWB)-based wireless personal area network (wireless personal area network, WPAN) system, a sensing (sensing) system, and the like. This is not limited herein. For ease of understanding, the following mainly briefly describes a system architecture of a wireless local area network provided in embodiments of this application.

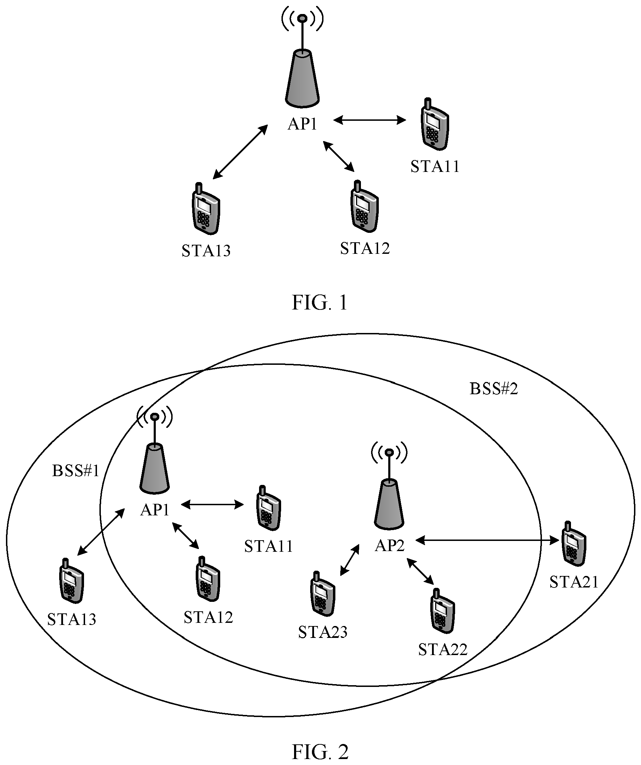

For example, FIG. 1 is a diagram of a system architecture of a wireless local area network according to an embodiment of this application. As shown in FIG. 1, the wireless local area network may include one AP (for example, AP1 in FIG. 1) and one or more stations (for example, STA11, STA12, and STA13 in FIG. 1). The AP may access the Internet in a wired or wireless manner. The AP (for example, AP1 in FIG. 1) may be associated with multiple STAs (for example, STA11, STA12, and STA13 in FIG. 1). The AP may perform uplink and downlink communication with the multiple associated STAs according to the 802.11 protocols. The 802.11 protocols may include IEEE 802.11be (or referred to as Wi-Fi 7 or EHT protocol), and may further include protocols such as IEEE 802.11ax and IEEE 802.11ac. Certainly, with continuous evolution and development of communication technologies, the 802.11 protocols may further include an IEEE 802.11be next-generation protocol, and the like. In the wireless local area network, an apparatus for implementing a method in this application may be an access point or a station in the WLAN, or a chip or a processing system installed in the access point or the station.

For example, FIG. 2 is a diagram of another system architecture of a wireless local area network according to an embodiment of this application. Generally, the network architecture of the wireless local area network may further include multiple basic service sets (basic service set, BSS). For example, FIG. 2 shows two BSSs: BSS#1 and BSS#2. One BSS includes an AP and multiple STAs associated with the AP. Generally, STAs in a wireless signal coverage area of an AP are associated with the AP. In actual application, it is common that multiple BSSs overlap in coverage areas, so that an overlapping BSS (overlapping BSS, OBSS) is formed. As shown in FIG. 2, a coverage area in which two BSSs overlap is an OBSS.

As shown in FIG. 2, BSS#1 includes AP1, STA11, STA12, and STA13, and BSS#2 includes AP2, STA21, STA22, and STA23. STA11, STA12, STA22, and STA23 are mutually overlapping parts of the two BSSs. Each BSS includes an AP and multiple STAs. In one BSS, data may be transmitted between an AP and each STA, and data may be transmitted between multiple STAs. AP1 and AP2 may also communicate with each other, and STAs included in the two BSSs may also communicate with each other.

It should be understood that FIG. 1 and FIG. 2 are merely examples and should not constitute a limitation on a network architecture of a wireless local area network to which this application is applicable. For example, the network architecture may further include more BSSs, each BSS may further include more STAs, or a part of BSSs may not include an AP. An area in which multiple BSSs mutually overlap may further include more STAs, or the like. This is not limited herein in embodiments of this application.

The following briefly describes an access point (AP) and a non-access point station (non-AP STA) in this application.

In this specification, unless otherwise specified, the non-access point station (non-AP STA) may also be referred to as a station (station, STA) for short, and the non-access point station and the station may be used interchangeably. Optionally, the station may also be a general term of the AP and the non-AP STA.

The access point (for example, AP1 in FIG. 1) is an apparatus having a wireless communication function, supports communication by using a WLAN protocol, has a function of communicating with another device (for example, a station or another access point) in a WLAN network, and certainly may further have a function of communicating with another device. In a WLAN system, the access point may be referred to as an access point station (access point station, AP STA). The apparatus having the wireless communication function may be an entire device, or may be a chip or a processing system installed in the entire device, or the like. The device in which the chip or the processing system is installed may implement methods and functions in embodiments of this application under control of the chip or the processing system. The AP in embodiments of this application is an apparatus that provides a service for the STA, and may support the 802.11 series protocols. For example, the AP may be a communication entity, for example, a communication server, a router, a switch, or a bridge. The AP may include a macro base station, a micro base station, a relay station, and the like in various forms. Certainly, the AP may alternatively be a chip and a processing system in these devices in various forms, to implement the methods and the functions in embodiments of this application.

The station (for example, STA11, STA12, and STA13 in FIG. 1) is an apparatus having a wireless communication function, supports communication by using the WLAN protocol, and has a capability of communicating with another station or an access point in the WLAN network. In the WLAN system, the station may be referred to as a non-access point station (non-access point station, non-AP STA). For example, the STA is any user communication device that allows a user to communicate with an AP and further communicate with the WLAN. The apparatus having the wireless communication function may be an entire device, or may be a chip or a processing system installed in the entire device, or the like. The device in which the chip or the processing system is installed may implement the methods and the functions in embodiments of this application under control of the chip or the processing system. For example, the STA may be a user device that can connect to a network, for example, a tablet computer, a desktop computer, a laptop computer, a notebook computer, an ultra-mobile personal computer (Ultra-mobile personal computer, UMPC), a handheld computer, a netbook, a personal digital assistant (personal digital assistant, PDA), or a mobile phone; or may be an Internet of things node in the Internet of things, an in-vehicle communication apparatus in the Internet of vehicles, an entertainment device, a game device or system, a global positioning system device, or the like. The STA may alternatively be a chip and a processing system in the foregoing terminals.

The WLAN system can provide high-speed and low-latency transmission. With continuous evolution of WLAN application scenarios, the WLAN system is to be applied to more scenarios or industries, for example, the Internet of things industry, the Internet of vehicles industry, the banking industry, enterprise office, exhibition halls of stadiums, concert halls, hotel rooms, dormitories, wards, classrooms, supermarkets, squares, streets, production workshops, and warehousing. Certainly, a device (for example, an access point or a station) that supports WLAN communication may be a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node in the Internet of things, an entertainment terminal (for example, augmented reality (augmented reality, AR), virtual reality (virtual reality, VR), or another wearable device), a smart device in smart office (for example, a printer, a projector, a loudspeaker, or a stereo), an Internet of vehicles device in the Internet of vehicles, infrastructure (for example, a vending machine, a self-service navigation station of a supermarket, a self-service cash register device, or a self-service ordering machine) in daily life scenarios, a device in a large sports and music venue, or the like. Specific forms of the station and the access point are not limited in embodiments of this application, and are merely examples for description herein.

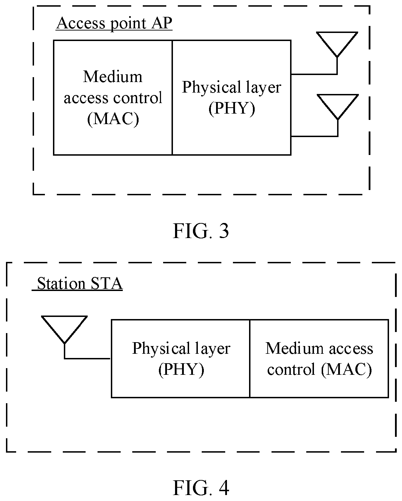

It should be understood that the 802.11 standard focuses on a physical layer (physical layer, PHY) and a medium access control (medium access control, MAC) layer. In an example, FIG. 3 is a diagram of a structure of an access point according to an embodiment of this application. The AP may be a multi-antenna/multi-radio frequency AP, or may be a single-antenna/single-radio frequency AP. The antenna/radio frequency is used to send/receive a data packet (where the data packet in this specification may also be referred to as a physical layer protocol data unit (PHY protocol data unit, PPDU)). In an implementation, an antenna part or a radio frequency part of the AP may be separated from a main body part of the AP, that is, may be remotely arranged. In FIG. 3, the AP may include a physical layer processing circuit and a medium access control processing circuit. The physical layer processing circuit may be configured to process a physical layer signal, and the MAC layer processing circuit may be configured to process a MAC layer signal. In another example, FIG. 4 is a diagram of a structure of a station according to an embodiment of this application. FIG. 4 is a diagram of a structure of a single-antenna/single-radio frequency STA. In an actual scenario, the STA may alternatively be a multi-antenna/multi-radio frequency STA, and may be a device with at least two antennas. The antenna/radio frequency is used to send/receive a data packet. In an implementation, an antenna part or a radio frequency part of the STA may be separated from a main body part of the STA, that is, may be remotely arranged. In FIG. 4, the STA may include a PHY processing circuit and a MAC processing circuit. The physical layer processing circuit may be configured to process a physical layer signal, and the MAC layer processing circuit may be configured to process a MAC layer signal.

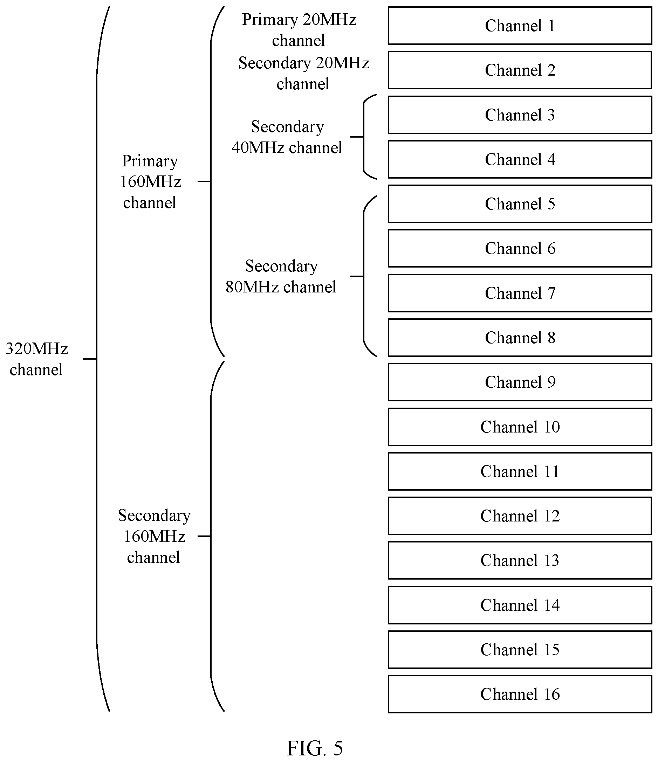

In a WLAN, channels are usually classified into a primary channel and a secondary channel, and the secondary channel may include one or more subchannels. In an example, if division is performed by using 20 MHz as a basic bandwidth unit, when a bandwidth of a channel is 20 MHz, the channel includes only one primary channel with a bandwidth of 20 MHz; when a bandwidth of a channel is greater than 20 MHz, the channel includes one primary channel with a bandwidth of 20 MHz, and one or more secondary channels of 20 MHz. For example, FIG. 5 is a diagram of a 320MHz channel. As shown in FIG. 5, the 320MHz channel includes a primary 160MHz channel and a secondary 160MHz channel. The 320MHz channel is sequentially numbered as a channel 1 to a channel 16, and each number represents a 20MHz channel. The channel 1 represents a primary 20MHz channel (primary 20MHz channel, P20). The channel 2 represents a secondary 20MHz channel (secondary 20MHz channel, S20). A secondary 40MHz channel (secondary 40MHz channel, S40) includes two subchannels with a bandwidth of 20 MHz: the channel 3 and the channel 4. A secondary 80MHz channel (secondary 80MHz channel, S80) includes four subchannels with a bandwidth of 20 MHz: the channels 5, 6, 7, and 8. The channels 5 and 6 are adjacent to each other, the channels 6 and 7 are adjacent to each other, and the channels 7 and 8 are adjacent to each other. One primary 160MHz channel includes the channels 1 to 8, and one secondary 160MHz channel includes the channels 9 to 16. It may be understood that, a meaning of one secondary 160MHz channel is that a bandwidth of the secondary channel is 160 MHz, and a meaning of one primary 160MHz channel is that a bandwidth of the primary channel is 160 MHz. In embodiments of this application, the secondary channel may also be referred to as a non-primary channel, and the secondary 160MHz channel may also be referred to as a 160MHz secondary channel. The primary channel is a common operation channel of stations (for example, the stations herein may be an AP and a non-AP STA) that are members in a basic service set, or the primary channel is a common operation channel of stations (or referred to as legacy stations, stations that do not support a multi-primary channel capability, or stations that do not support a non-primary channel access capability, where the stations herein may be an AP and a non-AP STA) that are legacy members in a basic service set. The access point or the station in the basic service set may perform channel contention on the primary channel, to preempt a channel resource. As shown in FIG. 2, AP1, STA11, STA12, and STA13 in BSS#1, and AP2, STA21, STA22, and STA23 in BSS#2 may perform channel contention on a channel 1, to preempt a channel resource.

In an example, an arrangement manner of the channels 1 to 16 may be shown in FIG. 5, or may be multiple other manners. This is not limited in this application. For ease of description, in all embodiments of this application, for the channel division in the WLAN, the channel 1 is used as the primary channel. It should be noted that the 802.11 system supports channel bandwidths of different sizes, and the channel may be contiguous bandwidths of 20 MHz, 40 MHz, 80 MHz, and 160 MHz, a noncontiguous bandwidth of 80 MHz+80 MHz, 320 MHz, 240 MHz+80 MHz, 160 MHz+160 MHz, or the like. In the next-generation 802.11 standard, the channel bandwidth may alternatively be another bandwidth. Optionally, a channel division method thereof may be similar to that of the foregoing 320MHz channel, and details are not described herein again.

Optionally, in some other examples, channel division may be performed by using a basic bandwidth unit greater than 20 MHz. For example, the primary channel may be 40 MHz, 80 MHz, or 160 MHz. This is not limited herein. For ease of understanding, in this application, an example in which channel division is performed by using 20 MHz as a basic bandwidth unit is mainly used for description.

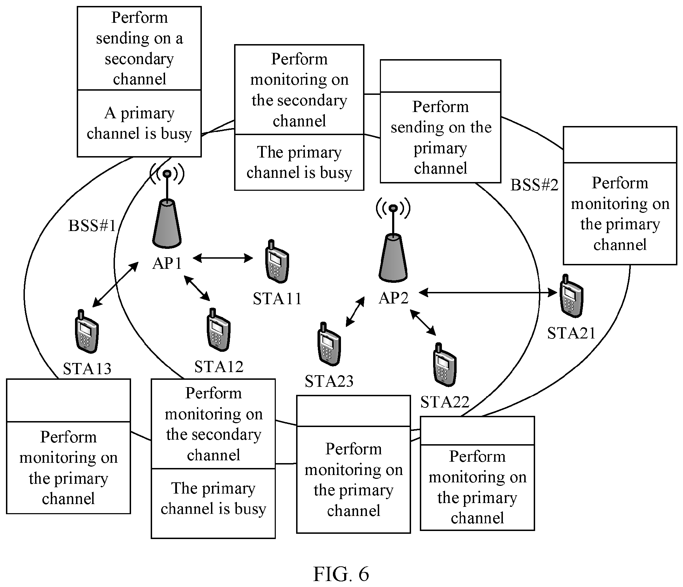

Currently, to ensure backward compatibility in the standard evolution process, regardless of a bandwidth, there is a unique primary 20MHz channel, and when data is sent by using any bandwidth, the primary 20MHz channel needs to be included. This leads to a problem: When the unique primary 20MHz channel is busy, all other idle secondary channels cannot be used, reducing system efficiency. Based on this, related technologies provide a solution in which switching from a primary channel to a secondary channel may be performed for channel access when the primary channel is busy. As shown in FIG. 6, when the primary channel is occupied by AP2, that is, when AP2 performs sending on the primary channel, STA21, STA22, and STA23 associated with AP2 perform monitoring on the primary channel. After AP1, STA11, and STA12 detect that the primary channel is occupied by AP2, AP1, STA11, and STA12 perform transmission on the secondary channel. Therefore, utilization of the secondary channel can be improved. However, in the solution, there may be a problem of inconsistent understanding of primary and secondary channel switching on an AP side and a STA side. Refer to FIG. 6. If a transmission target user STA13 of AP1 on the secondary channel is a hidden node of AP2, that is, STA13 cannot receive transmission of AP2, only AP1, STA11, and STA12 can detect that the primary channel is busy and switch to the secondary channel, but STA13 cannot detect that the primary channel is busy, and therefore cannot be triggered to switch to the secondary channel. Consequently, transmission between AP1 and STA13 is missed.

Based on this, this application provides a communication method, to resolve a problem of inconsistent understanding of primary and secondary channel switching on an AP side and a STA side, and help improve communication reliability.

The following describes in detail the technical solutions provided in this application with reference to more accompanying drawings.

In this application, unless otherwise specified, for same or similar parts of embodiments or implementations, refer to each other. In embodiments of this application and the implementations/methods/implementation methods in embodiments, unless otherwise specified or a logical conflict occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship thereof. The following implementations of this application are not intended to limit the protection scope of this application.

It should be noted that a name of a message, a name of each parameter/field in the message, or the like described in this application is merely an example, and may have another name in a specific implementation. This is not specifically limited in embodiments of this application.

It should be noted that a first device in embodiments of this application may be an AP or a STA, and a second device may be an AP or a STA. For ease of understanding, the following mainly uses an example in which both the first device and the second device are APs for understanding. For example, the first device may be AP1, the second device may be AP2, a third device associated with the first device may be a STA, and a fourth device associated with the second device may also be a STA. The scenario shown in FIG. 2 is used as an example. It is assumed that the first device is AP1 shown in FIG. 2, and the second device is AP2 shown in FIG. 2. STAs associated with AP1 are STA11, STA12, and STA13, and STAs associated with AP2 are STA21, STA22, and STA23. Optionally, in this application, a BSS to which the second device belongs is an OBSS of a BSS to which the first device belongs. In other words, the second device is a neighboring device/adjacent device of the first device, or in other words, the first device is adjacent to the second device.

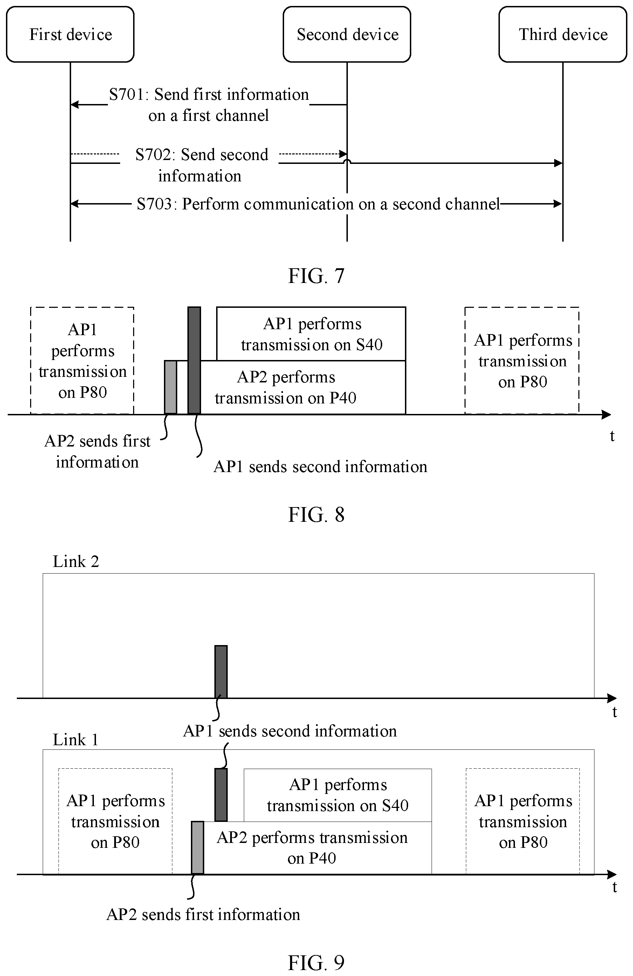

FIG. 7 is a schematic flowchart of a communication method according to an embodiment of this application. As shown in FIG. 7, the communication method includes the following steps S701 to S703. It should be understood that a scenario to which this application is applicable is a scenario in which a primary channel used by a first device is occupied by another device (for example, a second device), or a scenario in which a first device and a second device have a same primary (20MHz) channel, and the second device first successfully preempts a channel. It should be noted that FIG. 7 is a schematic flowchart of a method embodiment of this application, and shows detailed communication steps or operations of the method. However, these steps or operations are merely examples. Other operations or variants of various operations in FIG. 7 may be further performed in embodiments of this application. In addition, the steps in FIG. 7 may be performed in a sequence different from a sequence shown in FIG. 7, and not all operations in FIG. 7 may be performed.

S701: The second device sends first information to the first device on a first channel. Correspondingly, the first device receives, on the first channel, the first information from the second device.

It may be understood that the first information is used to trigger the first device to send second information, or it is described that the first information is used to inquire whether the first device has a transmission requirement on a second channel, or it is described that the first information is used to inquire whether the first device has a use/occupation requirement on a second channel. Optionally, the first information further includes information indicating the first channel, or in other words, includes information declaring use of the first channel. For example, the first information may be carried in a physical layer protocol data unit (physical protocol data unit, PPDU) for transmission. Optionally, a type of a frame used to carry the first information may be an RTS frame, a CTS frame, a trigger frame, a multi-AP trigger frame, another type of frame, or the like in the 802.11 protocol. This is not limited in this application. It should be understood that one PPDU may include one or more frames.

Optionally, the first channel in this application may also be referred to as a primary channel, and the second channel may also be referred to as a secondary channel, a non-primary channel, an auxiliary primary channel, a candidate primary channel, or the like. This is not limited in this application. It should be understood that the primary channel in this application may be a primary 20MHz channel, or may be a set of multiple 20MHz channels including a primary 20MHz channel, for example, a primary 40MHz channel (or referred to as a 40MHz primary channel) and a primary 80MHz channel (or referred to as an 80MHz primary channel). Details are not listed herein one by one.

Optionally, in this application, the second device may send the first information in a broadcast manner, or may send the first information in a multicast manner, or may send the first information in a unicast manner. This is not limited in this application. It should be understood that, when the first information is sent in the multicast manner, a multicast target address includes an address of the first device; or when the first information is sent in the unicast manner, a destination address included in the PPDU used to carry the first information is an address of the first device.

Optionally, in this application, a packet header of the PPDU used to carry the first information may further include indication information (for ease of description, referred to as second indication information below), and the second indication information indicates that the PPDU may be received by a device in a BSS in addition to a BSS (for example, a first BSS) to which the first device belongs.

Optionally, in some feasible implementations, if the first device and the second device negotiate in advance, for example, the first device may notify the second device in advance of a capability of the first device or an expected channel occupation requirement of the first device, the second device may send the first information to the first device when determining that the capability/requirement of the first device is met. For example, the second device may send the first information to the first device when determining that time for the first device to switch to the second channel for transmission is shorter than remaining time of channel occupancy time of the second device for the first channel. For another example, the second device may send the first information to the first device when determining that a channel bandwidth that the first device expects to occupy is less than or equal to an idle channel bandwidth. For still another example, the second device may send the first information to the first device when determining that a second channel that the first device expects to occupy exists in idle second channels. Optionally, the foregoing listed conditions may be combined with each other. This is not limited in this application. In other words, the second device may send the first information to the first device when a part or all of requirements of the first device are met.

S702: The first device sends the second information.

In some feasible implementations, if the first device has the transmission requirement on the second channel, the first device may send the second information; or if the first device does not have the transmission requirement on the second channel, the first device may not send the second information. Generally, if there is the transmission requirement on the second channel, after receiving the first information, the first device may wait for a short period of time and then send the second information. For example, after receiving the first information, the first device may wait for duration of a short interframe space (short interframe space, SIFS) and then send the second information. This embodiment is mainly described by using an example in which the first device has the transmission requirement on the second channel.

In a possible implementation, the first device may send the second information on the first channel and the second channel. Herein, the first channel and the second channel may be a set of basic channels, for example, a wideband channel including multiple 20MHz channels. Correspondingly, a third device associated with the first device may receive the second information from the first device. The second information indicates that the first device has the transmission requirement on the second channel. Therefore, the third device may switch to the second channel based on the received second information to communicate with the first device. That the third device receives the second information includes but is not limited to the following several cases: 1. The third device receives the second information on the first channel, that is, the third device performs monitoring only on the first channel. 2. Alternatively, the third device may receive the second information on the first channel and the second channel, that is, the third device may perform monitoring on a multi-channel combination including the first channel. 3. Alternatively, if the third device supports parallel receiving on multiple channels, the third device may receive the second information in parallel on the first channel or the second channel. 4. For the third device that has switched to the second channel, the third device may receive the second information on the second channel. The scenario shown in FIG. 2 is used as an example. It is assumed that the first device is AP1 shown in FIG. 2, and STAs associated with AP1 are STA11, STA12, and STA13. If AP1 sends the second information on the first channel and the second channel, STA11, STA12, and STA13 may receive the second information from the first device on the first channel and/or the second channel. For ease of understanding, the following mainly uses an example in which the third device is STA13 for description.

Optionally, the second device may also receive the second information from the first device. For example, the second device may receive the second information from the first device on the first channel.

For example, as shown in FIG. 8, it is assumed that AP1 fully uses a frequency when performing transmission on a primary 80MHz channel (that is, P80, where P80 includes P40 and a secondary 40MHz channel (that is, S40)). If AP2 first preempts a channel, and AP2 performs transmission on a primary 40MHz channel (that is, P40), after successfully preempting the channel, AP2 sends first information on P40 before a transmission opportunity (transmission opportunity, TXOP) of AP2 ends, where the first information is used to trigger an AP having a non-primary channel transmission capability to send second information as a response. Correspondingly, after AP1 receives the first information on P40, if AP1 has a transmission requirement on a non-primary channel, AP1 may first send the second information on a channel (for example, P80) including the primary channel and a target non-primary channel, and further perform transmission for a served user on the non-primary channel. After STA13 receives the second information, STA13 may perform receiving monitoring on an indicated non-primary channel (for example, S40) at specified time. Optionally, if AP2 successfully preempts the channel subsequently, AP1 may continue to perform transmission on P80. Optionally, STA13 may receive the second information on P40, or STA13 may receive the second information on P20, or STA13 may receive the second information on P80, or the like. This is not limited.

In another possible implementation, the first device may send the second information on the second channel of a first link and on a second link. Herein, the first link (for example, may be an optical link) and the second link (for example, may be Bluetooth) are included in multiple links between the first device and the third device. In other words, for the first device having a multi-link capability, the first device may declare, on the second link, that the first device has a transmission requirement on a secondary channel of the first link. Correspondingly, after the third device having the multi-link capability receives the declaration, the third device may communicate with the first device on the second channel. Optionally, when the second device is a multi-link device, the second device may also receive, on the second link, the second information from the first device, and determine, based on the received information, that the first device has the transmission requirement on the second channel.

For example, as shown in FIG. 9, an example in which the first link is a link 1 and the second link is a link 2 is used. It is assumed that AP1 fully uses a frequency when performing transmission on P80 of the link 1. If AP2 first preempts a channel of the link 1, and AP2 performs transmission on P40 of the link 1, it should be understood that after successfully preempting the channel, AP2 sends first information on P40 before a TXOP of AP2 ends, where the first information is used to trigger an AP having a non-primary channel transmission capability to send second information as a response. Correspondingly, after AP1 receives the first information on P40, if AP1 has a transmission requirement on a non-primary channel, AP1 may send the second information on the link 2 and S40 of the link 1. Further, AP1 performs transmission for a served user on the non-primary channel. Correspondingly, after STA13 receives the second information on the link 2, STA13 may perform receiving monitoring on an indicated non-primary channel (for example, S40) at specified time. Optionally, if AP2 successfully preempts the channel of the link 1 subsequently, AP1 may continue to perform transmission on P80 of the link 1.

It should be noted that in this application, the first device needs to send the second information on the second channel to declare that the first device has the transmission requirement on the second channel, so as to prevent another device from preempting the second channel.

Optionally, in addition to indicating that the first device has the transmission requirement on the second channel, the second information in this application may further indicate one or more of identification information of the second channel, channel occupancy time of the second channel, a transmission participant corresponding to the second channel, or other information. In other words, the second information may further indicate a specified channel, specified time, a specified transmission participant, and/or other information. For example, the second information may indicate the specified transmission participant to perform communication/transmission on the specified channel at the specified time.

Optionally, the identification information of the second channel may be a channel frequency, a channel number, a channel index, or the like of the second channel. This is not limited in this application. Optionally, the identification information of the second channel may be specifically indicated by a bitmap (bitmap).

Optionally, an indication manner of the transmission participant corresponding to the second channel may be a direct indication, or may be an indirect indication. For example, the direct indication may be that the second information includes information about a device list (referred to as a device list 1 below) that is allowed to/can communicate with the first device on the second channel. Therefore, a receiver may determine, based on the received second information, whether the device list 1 obtained through decoding includes a device identifier of the receiver. Generally, if the device list 1 does not include the device identifier of the receiver, the receiver ignores the second information; or if the device list 1 includes the device identifier of the receiver, the receiver may switch to the second channel to communicate with the first device.

For another example, the indirect indication may be that the second information includes a device list (referred to as a device list 2 below) that is not allowed to/cannot communicate with the first device on the second channel. Therefore, a receiver may determine, based on the received second information, whether the device list 2 obtained through decoding includes a device identifier of the receiver. Generally, if the device list 2 includes the device identifier of the receiver, the receiver ignores the second information; or if the device list 2 does not include the device identifier of the receiver, the receiver may switch to the second channel to communicate with the first device.

It should be understood that the second information may be carried in one PPDU. Optionally, the second information may be separately carried in two PPDUs. In other words, the second information in this application may include second information 1 and second information 2, where the second information 1 is carried in one PPDU, and the second information 2 is carried in the other PPDU. For example, the second information 1 indicates that the first device has the transmission requirement on the second channel, and the second information 2 indicates one or more of the identification information of the second channel, the channel occupancy time of the second channel, the transmission participant corresponding to the second channel, or other information. This is not limited in this application.

Optionally, a type of a frame used to carry the second information may be specifically an RTS frame, a CTS frame, a trigger frame, a multi-AP trigger frame, another type of frame, or the like in the 802.11 protocol. This is not limited in this application. Optionally, when the second information may include the second information 1 and the second information 2, the second information 1 and the second information 2 may be carried in two frames of one PPDU, or the second information 1 and the second information 2 may be carried in one frame of one PPDU.

Optionally, the second information may not have a function of indicating the identification information of the second channel, the channel occupancy time of the second channel, the transmission participant corresponding to the second channel, and other information. In other words, the identification information of the second channel, the channel occupancy time of the second channel, the transmission participant corresponding to the second channel, and other information may not be indicated by the first device by using the second information, but may be predefined in a protocol or preconfigured. For ease of description, the following mainly uses protocol predefinition as an example for description. For example, the protocol may predefine that the second channel is a specific channel. When there is a transmission requirement on the secondary channel, the first device and the third device switch to the specific second channel by default for transmission. For another example, the protocol may alternatively predefine multiple second channels, and specify a channel selection rule. Therefore, when there is a transmission requirement on the secondary channel, the first device and the third device may select one second channel from the multiple second channels according to the agreed channel selection rule, and perform communication on the same selected second channel.

Similarly, the channel occupancy time of the second channel may also be predefined in the protocol. For example, the protocol may predefine that the channel occupancy time of the second channel starts from a moment before a TXOP of the second device ends and ends at an end position of the TXOP. Similarly, the protocol may predefine that the second device having some features or belonging to a specific type may serve as the transmission participant corresponding to the second channel. In other words, it is specified that only the second device having some features or belonging to the specific type can be allowed to switch to the second channel to communicate with the first device. This is not limited in this application.

S703: The first device communicates with the third device on the second channel.

Generally, when the first device has the transmission requirement on the second channel, the first device may switch to the specified second channel at specified time after sending the second information. Correspondingly, when the third device learns that the first device has the transmission requirement on the second channel, the third device may also switch to the specified second channel at the specified time. Therefore, the first device and the third device may communicate with each other on the second channel.

In a possible implementation, that the first device communicates with the third device on the second channel may be understood as follows: The first device switches from the primary channel of the first device to the second channel (that is, the secondary channel) to communicate with the third device, or it is described that the first device switches from the first channel to the second channel to communicate with the third device. It should be understood that, that the first device communicates with the third device on the second channel may be: The first device sends data to the third device on the second channel, and correspondingly, the third device receives the data from the first device on the second channel (or the third device performs monitoring on the second channel); or the third device sends data to the first device on the second channel, and correspondingly, the first device receives the data from the third device on the second channel (or the first device performs monitoring on the second channel).

Optionally, after the channel occupancy time of the second channel ends, the first device and the third device may further synchronously switch from the second channel to the first channel (or the primary channel) to continue communication, or it is described that after the channel occupancy time of the second channel ends, the first device and the third device switch to the first channel (or the primary channel) within specified time to continue communication. Generally, the specified time is related to end time of occupying the second channel by the first device, or the specified time is related to end time of occupying the first channel by the second device. For example, the specified time starts from the end time of occupying the second channel by the first device (or the end time of occupying the first channel by the second device) and ends at switching time agreed upon through capability negotiation, to complete switching to the first channel.

Optionally, before step S701, the method may further include the following step S7001 and/or step S7002 (not shown in FIG. 7 temporarily).

S7001: The first device sends third information to the second device. Correspondingly, the second device receives the third information from the first device.

It may be understood that the third information indicates a capability of the first device to support switching from the first channel to the second channel for transmission, or it is described that the third information indicates a capability of the first device to support switching from the primary channel to the secondary channel for transmission, or it is described that the third information indicates a capability of the first device to support transmission on the secondary channel other than the primary channel, or it is described that the third information indicates a capability of the first device to support transmission on multiple channels, or it is described that the third information indicates a capability of the first device to support transmission on the auxiliary primary channel, or it is described that the third information indicates a capability of the first device to support transmission on the candidate primary channel. The first channel and the second channel do not overlap. For example, the third information may be indicated by 1 bit (bit). For example, when the 1 bit is 1, it indicates that the first device supports the capability of switching from the first channel to the second channel for transmission; or when the 1 bit is 0, it indicates that the first device does not support the capability of switching from the first channel to the second channel for transmission.

Optionally, the third information may further indicate one or more of an identifier of the first device, at least one second channel supported by the first device, time information for the first device to support switching from the first channel to the second channel for transmission, a channel bandwidth supported by the first device, a quantity of spatial streams supported by the first device during transmission on the second channel, or other information. The time information for the first device to support switching from the first channel to the second channel for transmission may include the channel occupancy time of the second channel (for example, time for performing data transmission on the second channel). Optionally, the time information for the first device to support switching from the first channel to the second channel for transmission may further include switching time for switching from the first channel to the second channel, and the like. This is not limited in this application. Optionally, the time information for the first device to support switching from the first channel to the second channel for transmission may also be a sum of the channel occupancy time of the second channel and the switching time for performing channel switching, that is, total duration of non-primary channel grant. Optionally, duration of the switching time may be 0 (that is, no additional switching time is needed), or duration of the switching time may be greater than 0. For example, specific duration of the switching time may be determined based on a device capability. This is not limited.

For example, for the first device and the second device that have the multi-link capability (that is, when the first device and the second device are multi-link devices), it is assumed that the first channel and the second channel are channels of one link (such as the first link, for example, the first link may be an optical link). In this case, in an implementation, the first device may send the third information to the second device on a channel (for example, the first channel) of the first link. In another implementation, the first device may send the third information to the second device on another link (such as the second link, for example, the second link may be Bluetooth).

Optionally, a type of a frame used to carry the third information may be specifically an RTS frame, a CTS frame, a trigger frame, a multi-AP trigger frame, another type of frame, or the like in the 802.11 protocol. This is not limited in this application.

S7002: The first device sends fourth information to the second device. Correspondingly, the second device receives the fourth information from the first device.

The fourth information is used to trigger the second device to send the first information, or the fourth information is used to request the second device to send the first information. Optionally, the fourth information may further indicate one or more of the second channel that the first device expects to occupy, channel occupancy time expected by the first device, a channel bandwidth that the first device expects to occupy, a quantity of spatial streams expected by the first device during transmission on the second channel, or other information. Generally, the second channel that the first device expects to occupy and that is indicated by the fourth information is a subset of the at least one second channel that is supported by the first device and that is indicated by the third information. Similarly, the channel occupancy time expected by the first device and indicated by the fourth information is a subset of the channel occupancy time supported by the first device and indicated by the third information, the channel bandwidth expected by the first device and indicated by the fourth information is a subset of the channel bandwidth supported by the first device and indicated by the third information, and the quantity of spatial streams expected by the first device during transmission on the second channel and indicated by the fourth information is a subset of the quantity of spatial streams supported by the first device during transmission on the second channel and indicated by the third information.

Optionally, after the second device receives the fourth information, the second device may send the first information to the first device on the first channel when determining that one or more of the following conditions are met. For example, the met conditions include: 1. Remaining time of the channel occupancy time of the second device for the first channel is longer than or equal to the channel occupancy time expected by the first device. 2. A remaining/idle channel bandwidth is greater than or equal to the channel bandwidth expected by the first device. 3. The second channel that the first device expects to occupy exists in idle second channels.

Optionally, a type of a frame used to carry the fourth information may be specifically an RTS frame, a CTS frame, a trigger frame, a multi-AP trigger frame, another type of frame, or the like in the 802.11 protocol. This is not limited in this application.

Optionally, to implement quick information exchange and non-primary channel sharing, the third information and the fourth information in step S7001 and step S7002 in this application may be carried in one PPDU or one frame, or the third information and the fourth information may be respectively carried in two PPDUs or two frames. This is not limited in this application.

Specifically, in a possible implementation, this application may include three phases: a capability exchange phase (that is, step S7001), a requirement negotiation phase (that is, step S7002), and a non-primary channel access execution phase (that is, steps S701 to S703). A specific implementation may be as follows: After learning, in the capability exchange phase, that the first device and the second device have a capability of supporting non-primary channel access, if the first device determines, based on a service load requirement, a non-primary channel interference status, a channel status of an associated to-be-served STA, or the like, that the first device has the transmission requirement on the non-primary channel, the first device may send the fourth information to the second device. After the second device receives the fourth information, if the second device successfully preempts the channel, the second device may send the first information to the first device on the first channel when a specific condition is met, to provide the first device with a non-primary channel access opportunity. For example, the met condition includes that the remaining time of the channel occupancy time of the second device for the first channel is longer than or equal to the channel occupancy time expected by the first device, and details are not described herein again.

In another possible implementation, this application may alternatively include two phases: a capability exchange phase (that is, step S7001) and a non-primary channel access execution phase (that is, steps S701 to S703). A specific implementation may be as follows: After learning, in the capability exchange phase, that the first device and the second device have a capability of supporting non-primary channel access, if the second device successfully preempts the channel, the second device may send the first information to the first device on the first channel, to provide the first device with a non-primary channel access opportunity.

In this embodiment of this application, the second device occupying the primary channel provides the first device with an opportunity for the first device to declare that the first device has the transmission requirement on the secondary channel, so that the third device associated with the first device can synchronously switch, based on the received declaration (that is, the second information) of the first device, to the secondary channel with the first device for transmission, to resolve a problem of inconsistent understanding of primary and secondary channel switching on a first device side and a third device side associated with the first device, and help improve communication reliability. For example, the first device is AP1 in FIG. 6, the second device is AP2 in FIG. 6, and the third device is STA13 in FIG. 6. After AP2 successfully preempts a channel, AP2 provides AP1 with a transmission opportunity for sending the second information, so that STA13 that originally camps on the primary channel can switch to the non-primary channel for monitoring based on the second information. Therefore, communication reliability can be improved.

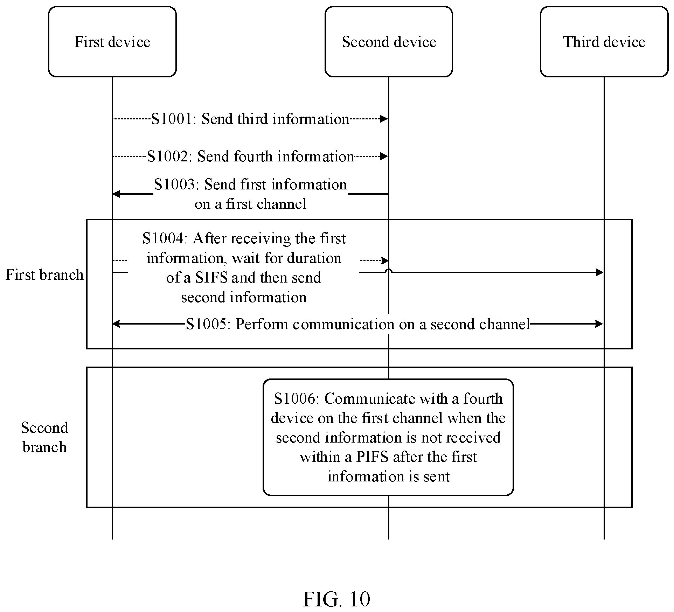

FIG. 10 is another schematic flowchart of a communication method according to an embodiment of this application. As shown in FIG. 10, the communication method includes the following steps S1001 to S1006. It should be understood that a scenario to which this application is applicable is a scenario in which a primary channel used by a first device is occupied by another device (for example, a second device), or a scenario in which a first device and a second device have a same primary (20MHz) channel, and the second device first successfully preempts a channel. It should be noted that FIG. 10 is a schematic flowchart of a method embodiment of this application, and shows detailed communication steps or operations of the method. However, these steps or operations are merely examples. Other operations or variants of various operations in FIG. 10 may be further performed in embodiments of this application. In addition, the steps in FIG. 10 may be performed in a sequence different from a sequence shown in FIG. 10, and not all operations in FIG. 10 may be performed.

S1001: The first device sends third information to the second device. Correspondingly, the second device receives the third information from the first device.

Step S1001 is an optional step. For understanding of step S1001, refer to related descriptions in step S7001. Details are not described herein again.

S1002: The first device sends fourth information to the second device. Correspondingly, the second device receives the fourth information from the first device.

Step S1002 is an optional step. For understanding of step S1002, refer to related descriptions in step S7002. Details are not described herein again.

S1003: The second device sends first information to the first device on a first channel. Correspondingly, the first device receives, on the first channel, the first information from the second device.

For understanding of step S1003, refer to related descriptions in step S701. Details are not described herein again.

It should be understood that after the first device receives the first information on the first channel, if the first device has a transmission requirement on a second channel, the first device may send second information; or if the first device does not have a transmission requirement on a second channel, the first device may not send second information. Correspondingly, for the second device, after the second device sends the first information, the second device may reserve specific time (for example, a first time interval) to provide the first device with a transmission opportunity for sending the second information. For example, the first time interval may be a point coordination function interframe space (point coordination function interframe space, PIFS), a priority interframe space (priority interframe space, PIFS), a SIFS+additional time specified in a protocol, or the like. This is not limited in this application. For ease of description, the following mainly uses an example in which the first time interval is a PIFS for description. The following separately describes examples of cases in which the first device has the transmission requirement on the second channel and the first device does not have the transmission requirement on the second channel.

In a first branch, the first device has the transmission requirement on the second channel.

S1004. After receiving the first information, the first device waits for duration of the SIFS and then sends the second information.

Generally, if the first device has the transmission requirement on the second channel, after receiving the first information, the first device may wait for the duration of the SIFS and then send the second information. It should be understood that the SIFS is shorter than the PIFS, or in other words, the PIFS is longer than the SIFS. Herein, for specific understanding of step S1004 in which the first device sends the second information, refer to related descriptions in step S702. Details are not described herein again.

Optionally, for the second device, when the first device has the transmission requirement on the second channel, after sending the first information, the second device may wait for a second time interval and then communicate with a fourth device on the first channel. The fourth device is a device associated with the second device, or in other words, the fourth device is associated with the second device. The first time interval is different from the second time interval. Generally, the first time interval is greater than/longer than the second time interval. For example, the second time interval may be equal to a sum of twice duration of the SIFS and time consumed by the first device to send the second information.

S1005: The first device communicates with a third device on the second channel.

It should be understood that, when the first device has the transmission requirement on the second channel, after the first device sends the second information, the first device may communicate, on the second channel, with the third device that receives the second information. Herein, for specific understanding of step S1005, refer to related descriptions in step S703. Details are not described herein again.

In a second branch, the first device does not have the transmission requirement on the second channel.

S1006: The second device communicates with the fourth device on the first channel when the second device does not receive the second information within the PIFS after sending the first information.

Generally, if the first device does not have the transmission requirement on the second channel, the first device does not send the second information. Correspondingly, for the second device, the second device may wait for the PIFS. The second device may communicate with the fourth device on the first channel if the second information is not monitored/detected/received within the PIFS after the first information is sent. Optionally, that the second device does not receive the second information within the PIFS after sending the first information may be alternatively described as follows: The second device detects, within the PIFS after sending the first information, that a channel is busy, or detects no start of the second information, or detects no start of the PPDU.

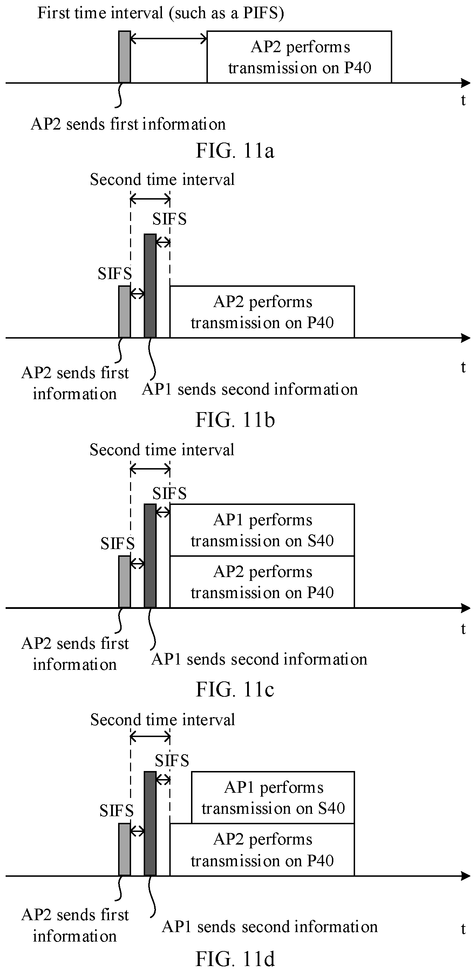

It should be understood that for the fourth device associated with the second device, after the fourth device receives the first information on the first channel, there may be the following two cases: In a case 1, after receiving the first information, the fourth device waits for the first time interval (for example, the PIFS) and then starts to detect transmission from the second device, as shown in FIG. 11a. It should be understood that the case 1 corresponds to a scenario in which the first device does not have the transmission requirement on the second channel. In a case 2, after receiving the first information, the fourth device waits for the second time interval and then starts to detect transmission from the second device, as shown in FIG. 11b. It should be understood that the case 2 corresponds to a scenario in which the first device has the transmission requirement on the second channel.

Optionally, in the case 2, for the first device, start time at which the first device communicates with the third device on the second channel may be aligned with start time at which the second device communicates with the fourth device on the first channel (that is, the start time at which the first device communicates with the third device on the second channel is equal to the start time at which the second device communicates with the fourth device on the first channel), as shown in FIG. 11c. This is because if the first device or the third device has a strong channel switching capability, the first device or the third device may complete channel switching within duration of the SIFS after sending or receiving the second information, that is, switching time is shorter than or equal to the SIFS.

Optionally, in the case 2, start time at which the first device communicates with the third device on the second channel may alternatively be later than start time at which the second device communicates with the fourth device on the first channel, as shown in FIG. 11d. This is because if the first device or the third device has a weak channel switching capability, channel switching time may be longer than the SIFS.

Optionally, end time at which the first device communicates with the third device on the second channel may be earlier than end time at which the second device communicates with the fourth device on the first channel, or end time at which the first device communicates with the third device on the second channel may be equal to end time at which the second device communicates with the fourth device on the first channel (that is, the end time at which the first device communicates with the third device on the second channel is aligned with the end time at which the second device communicates with the fourth device on the first channel). Specifically, this is determined based on a communication requirement between the first device and the third device, and is not limited herein. FIG. 8, FIG. 9, and FIG. 11a to FIG. 11d mainly show a case in which the end time at which the first device communicates with the third device on the second channel is equal to the end time at which the second device communicates with the fourth device on the first channel.

It should be noted that when a solution in which time of the first time interval (for example, the PIFS) is reserved to provide the first device with a transmission opportunity for sending the second information (that is, declaring the transmission requirement on the second channel) is used by default in this embodiment, the foregoing two cases may exist for transmission between the second device and the fourth device. Optionally, whether the solution in which the time of the PIFS is reserved to provide the first device with the transmission opportunity for sending the second information is used may also be flexibly configured. For example, the second device may send first indication information on the first channel, where the first indication information indicates whether to enable a PIFS-based transmission solution. After receiving the first indication information on the first channel, the fourth device may perform monitoring on the first channel based on the first indication information. Generally, when the first indication information indicates to enable the PIFS-based transmission solution, the fourth device may perform monitoring on the first channel in the foregoing two cases; or when the first indication information indicates not to enable the PIFS-based transmission solution, the fourth device may perform monitoring on the first channel in the case 2. Details are not described herein again. For example, the first indication information and the first information may be carried in a same PPDU for transmission.

In this embodiment of this application, the solution in which after sending the first information, the second device reserves a maximum of the time of the first time interval for the first device to allow the first device to send the second information (or in other words, to allow the first device to declare that the first device has the transmission requirement on the non-primary channel). This helps improve system efficiency.

The foregoing content describes in detail the methods in this application. To better implement the foregoing solutions in embodiments of this application, embodiments of this application further provide a corresponding apparatus or device.

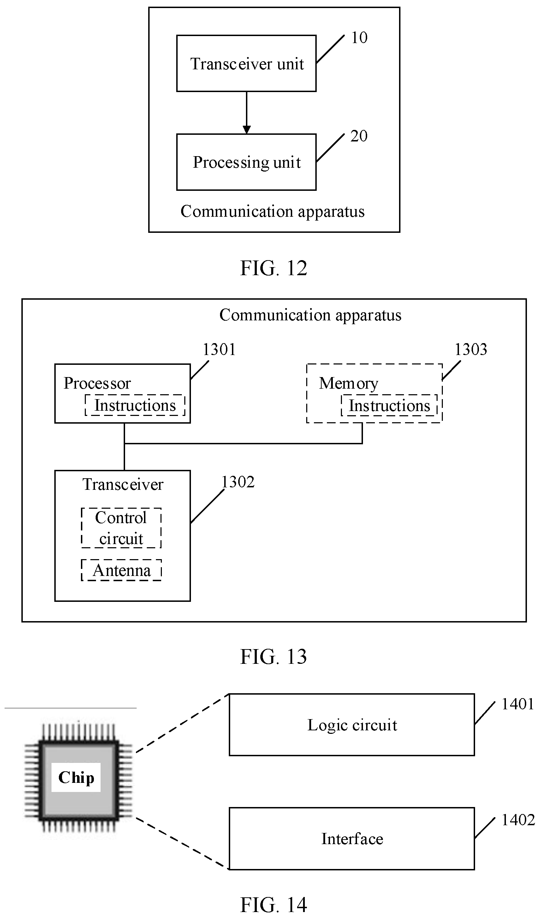

In this application, the first device, the second device, and the like are divided into functional modules according to the foregoing method embodiments. For example, functional modules corresponding to functions may be obtained through division, or two or more functions may be integrated into one processing module. The integrated module may be implemented in a form of hardware, or may be implemented in a form of a software functional module. It should be noted that, in this application, division into the modules is an example, and is merely logical function division. In actual implementation, another division manner may be used. The following describes in detail communication apparatuses in embodiments of this application with reference to FIG. 12 to FIG. 14.

FIG. 12 is a diagram of a structure of a communication apparatus according to an embodiment of this application. As shown in FIG. 12, the communication apparatus includes a transceiver unit 10 and a processing unit 20.

In some embodiments of this application, the communication apparatus may be the first device (for example, AP1) shown above or a chip such as a Wi-Fi chip in the first device. In other words, the communication apparatus shown in FIG. 12 may be configured to perform steps, functions, or the like performed by the first device (for example, AP1) in the foregoing method embodiments.

In a design, the transceiver unit 10 is configured to receive first information from a second device on a first channel, where the first information is used to trigger the first device to send second information; the transceiver unit 10 is configured to send the second information, where the second information indicates that the first device has a transmission requirement on a second channel, and the first channel and the second channel do not overlap; and the transceiver unit 10 is configured to communicate with a third device on the second channel, where the third device is a device associated with the first device.

The processing unit 20 is configured to process information received via the transceiver unit 10, for example, the first information, and generate information that needs to be sent via the transceiver unit 10, for example, the second information. This is not limited.

For specific descriptions of the first information, the second information, and the like, refer to the foregoing method embodiments. Details are not described herein again.

It may be understood that specific descriptions of the transceiver unit and the processing unit shown in this embodiment of this application are merely examples. For specific functions, performed steps, or the like of the transceiver unit and the processing unit, refer to the related descriptions in the foregoing method embodiments. Details are not described herein again.

FIG. 12 is reused. In some other embodiments of this application, the communication apparatus may be the second device (for example, AP2) shown above or a chip such as a Wi-Fi chip in the second device. In other words, the communication apparatus shown in FIG. 12 may be configured to perform steps, functions, or the like performed by the second device (for example, AP2) in the foregoing method embodiments.

In a design, the processing unit 20 is configured to determine first information; and the transceiver unit 10 is configured to send the first information to a first device on a first channel, where the first information is used to trigger the first device to send second information.

Optionally, the transceiver unit 10 is further configured to receive the second information, where the second information indicates that the first device has a transmission requirement on a second channel, and the first channel and the second channel do not overlap.

The processing unit 20 is configured to generate information that needs to be sent via the transceiver unit 10, for example, the first information, and process information that is received via the transceiver unit 10, for example, the second information. This is not limited.

For specific descriptions of the first information, the second information, and the like, refer to the foregoing method embodiments. Details are not described herein again.

It may be understood that specific descriptions of the transceiver unit and the processing unit shown in this embodiment of this application are merely examples. For specific functions, performed steps, or the like of the transceiver unit and the processing unit, refer to the related descriptions in the foregoing method embodiments. Details are not described herein again.

The foregoing describes the communication apparatus in embodiments of this application, and the following describes a possible product form of the communication apparatus. It should be understood that a product in any form that has a function of the communication apparatus in FIG. 12 falls within the protection scope of embodiments of this application. It should be further understood that the following description is merely an example, and does not limit a product form of the communication apparatus in embodiments of this application.

In a possible implementation, in the communication apparatus shown in FIG. 12, the processing unit 20 may be one or more processors, and the transceiver unit 10 may be a transceiver; or the transceiver unit 10 may be a sending unit and a receiving unit, the sending unit may be a transmitter, the receiving unit may be a receiver, and the sending unit and the receiving unit are integrated into one device, for example, a transceiver. In embodiments of this application, the processor and the transceiver may be coupled, or the like. A manner of a connection between the processor and the transceiver is not limited in embodiments of this application. In a process of performing the foregoing methods, a process of sending information (for example, sending various frames or elements) in the foregoing methods may be understood as a process of outputting the foregoing information by the processor. When outputting the information, the processor outputs the information to a transceiver, so that the transceiver transmits the information. After the information is outputted by the processor, other processing may further need to be performed on the information before the information arrives at the transceiver. Similarly, a process of receiving information (for example, receiving various frames or elements) in the foregoing methods may be understood as a process of receiving the input information by the processor. When the processor receives the input information, the transceiver receives the information, and inputs the information into the processor. Further, after the transceiver receives the information, other processing may need to be performed on the information before the information is input into the processor.

FIG. 13 is a diagram of another structure of a communication apparatus according to an embodiment of this application. The communication apparatus may be a first device, a second device, or a chip thereof. FIG. 13 shows only main components of the communication apparatus. In addition to the processor 1301 and the transceiver 1302, the communication apparatus may further include a memory 1303 and an input/output apparatus (not shown in the figure).

The processor 1301 is mainly configured to: process a communication protocol and communication data, control the entire communication apparatus, execute a software program, and process data of the software program. The memory 1303 is mainly configured to store the software program and data. The transceiver 1302 may include a control circuit and an antenna. The control circuit is mainly configured to: perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1301 may read the software program in the memory 1303, interpret and execute instructions of the software program, and process the data of the software program. When data needs to be sent in a wireless manner, the processor 1301 performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1301. The processor 1301 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The transceiver 1302 may include a receiver and a transmitter. The receiver is configured to perform a receiving function (or operation), and the transmitter is configured to perform a transmitting function (or operation). The transceiver is configured to communicate with another device/apparatus through a transmission medium.

The processor 1301, the transceiver 1302, and the memory 1303 may be connected through a communication bus.

For example, when the communication apparatus is configured to perform steps, methods, or functions performed by the first device,
the transceiver 1302 is configured to receive first information from a second device on a first channel, where the first information is used to trigger the first device to send second information;
the transceiver 1302 is configured to send the second information, where the second information indicates that the first device has a transmission requirement on a second channel, and the first channel and the second channel do not overlap; and
the transceiver 1302 is configured to communicate with a third device on the second channel, where the third device is a device associated with the first device.

Optionally, the processor 1301 is configured to process information received via the transceiver 1302, for example, the first information, and generate information that needs to be sent via the transceiver 1302, for example, the second information. This is not limited.

For example, when the communication apparatus is configured to perform steps, methods, or functions performed by the second device,
the transceiver 1302 is configured to send first information to a first device on a first channel, where the first information is used to trigger the first device to send second information; and
the transceiver 1302 is configured to receive the second information, where the second information indicates that the first device has a transmission requirement on a second channel, and the first channel and the second channel do not overlap.

Optionally, the processor 1301 is configured to generate information that needs to be sent via the transceiver 1302, for example, the first information, and process information that is received via the transceiver 1302, for example, the second information. This is not limited.

In this embodiment of this application, for descriptions of the first information, the second information, and the like, refer to the descriptions in the foregoing method embodiments. Details are not described herein again. It may be understood that for specific descriptions of the processor and the transceiver, refer to the descriptions of the processing unit and the transceiver unit shown in FIG. 12. Details are not described herein again.

Optionally, the processor 1301 may store instructions. The instructions may be a computer program. The computer program is run on the processor 1301, to enable the communication apparatus to perform the methods described in the foregoing method embodiments. The computer program may be solidified in the processor 1301. In this case, the processor 1301 may be implemented by hardware.

In an implementation, the communication apparatus may include a circuit. The circuit may implement the sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-channel metal oxide semiconductor (nMetal-oxide-semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus shown in this embodiment of this application may further have more components and the like than those in FIG. 13. This is not limited in this embodiment of this application. The foregoing methods performed by the processor and the transceiver are merely examples. For specific steps performed by the processor and the transceiver, refer to the descriptions in the foregoing method embodiments.

In another possible implementation, in the communication apparatus shown in FIG. 12, the processing unit 20 may be one or more logic circuits, and the transceiver unit 10 may be an input/output interface, or may be referred to as a communication interface, an interface circuit, an interface, or the like. Alternatively, the transceiver unit 10 may be a sending unit and a receiving unit. The sending unit may be an output interface, and the receiving unit may be an input interface. The sending unit and the receiving unit are integrated into one unit, for example, an input/output interface.

FIG. 14 is a diagram of still another structure of a communication apparatus according to an embodiment of this application. As shown in FIG. 14, the communication apparatus shown in FIG. 14 includes a logic circuit 1401 and an interface 1402. In other words, the processing unit 20 may be implemented as the logic circuit 1401, and the transceiver unit 10 may be implemented as the interface 1402. The logic circuit 1401 may be a chip, a processing circuit, an integrated circuit, a system on chip (system on chip, SoC) chip, or the like. The interface 1402 may be a communication interface, an input/output interface, a pin, or the like. For example, FIG. 14 shows an example in which the communication apparatus is a chip. The chip includes the logic circuit 1401 and the interface 1402.

In this embodiment of this application, the logic circuit may be further coupled to the interface. A specific connection manner of the logical circuit and the interface is not limited in this embodiment of this application.

For example, when the communication apparatus is configured to perform steps, methods, or functions performed by the first device, the interface 1402 is configured to receive first information and send second information. Optionally, the logic circuit 1401 is configured to process the first information and generate the second information.

For example, when the communication apparatus is configured to perform steps, methods, or functions performed by the second device, the interface 1402 is configured to send first information and receive second information. Optionally, the logic circuit 1401 is configured to generate the first information and process the second information.

In this embodiment of this application, for descriptions of the first information, the second information, the first device, the second device, and the like, refer to the descriptions in the foregoing method embodiments. Details are not described herein again. It may be understood that for specific descriptions of the logic circuit 1401 and the interface 1402, refer to the descriptions of the processing unit and the transceiver unit shown in FIG. 12. Details are not described herein again.

It may be understood that the communication apparatus shown in this embodiment of this application may implement the methods provided in embodiments of this application in a form of hardware, or may implement the methods provided in embodiments of this application in a form of software. This is not limited in embodiments of this application.

For specific implementations of the embodiments shown in FIG. 14, refer to the foregoing embodiments. Details are not described herein again.

An embodiment of this application further provides a wireless communication system. The wireless communication system includes a first device and a second device. The first device and the second device may be configured to perform the methods in the foregoing method embodiments. Optionally, the wireless communication system may further include a third device associated with the first device and/or a fourth device associated with the second device. For specific implementations of the third device and the fourth device, refer to the descriptions of the third device and the fourth device in the foregoing embodiments. Details are not described herein again.

In addition, this application further provides a computer program. The computer program is used to implement operations and/or processing performed by the first device in the methods provided in this application.

This application further provides a computer program. The computer program is used to implement operations and/or processing performed by the second device in the methods provided in this application.

This application further provides a computer-readable storage medium. The computer-readable storage medium stores computer code. When the computer code is run on a computer, the computer is enabled to perform operations and/or processing performed by the first device in the methods provided in this application.

This application further provides a computer-readable storage medium. The computer-readable storage medium stores computer code. When the computer code is run on a computer, the computer is enabled to perform operations and/or processing performed by the second device in the methods provided in this application.

This application further provides a computer program product. The computer program product includes computer code or a computer program. When the computer code or the computer program is run on a computer, operations and/or processing performed by the first device in the methods provided in this application are/is performed.

This application further provides a computer program product. The computer program product includes computer code or a computer program. When the computer code or the computer program is run on a computer, operations and/or processing performed by the second device in the methods provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, multiple units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on multiple network units. Some or all of the units may be selected based on an actual requirement to implement the technical effects of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or a part contributing to the conventional technology, or all or some of the technical solutions may be implemented in a form of software product. The computer software product is stored in a readable storage medium and includes several instructions for instructing a computer device (which may be a personal computer, a server, a network device, or the like) to perform all or some of the steps in the method described in embodiments of this application. The foregoing readable storage medium includes: various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first device, and comprising:
receiving first information from a second device on a first channel, wherein the first information is used to trigger the first device to send second information;
sending the second information, wherein the second information indicates that the first device has a transmission requirement on a second channel, and the first channel and the second channel do not overlap; and
communicating with a third device on the second channel, wherein the third device is a device associated with the first device.

2. The method according to claim 1, wherein the first information further comprises information indicating the first channel.

3. The method according to claim 1 or 2, wherein the sending the second information comprises:
sending the second information on the first channel and the second channel; and
sending the second information on the second channel of a first link and on a second link, wherein the first link and the second link are comprised in multiple links between the first device and the third device.

4. The method according to any one of claims 1 to 3, wherein the second information further indicates one or more of the following information:
identification information of the second channel, channel occupancy time of the second channel, or a transmission participant corresponding to the second channel.

5. The method according to any one of claims 1 to 3, wherein one or more of identification information of the second channel, channel occupancy time of the second channel, or a transmission participant corresponding to the second channel are predefined in a protocol.

6. The method according to any one of claims 1 to 5, wherein before the receiving the first information from the second device on the first channel, the method further comprises:
sending third information to the second device, wherein the third information indicates a capability of the first device to support switching from the first channel to the second channel for transmission.

7. The method according to claim 6, wherein the third information further indicates one or more of the following information:
at least one second channel supported by the first device, or time information for the first device to support switching from the first channel to the second channel for transmission.

8. A communication method, applied to a second device, and comprising:
determining first information; and
sending the first information to a first device on a first channel, wherein the first information is used to trigger the first device to send second information.

9. The method according to claim 8, wherein the method further comprises:
communicating with a fourth device on the first channel when the second information is not received within a point coordination function interframe space PIFS after the first information is sent, wherein the fourth device is a device associated with the second device.

10. The method according to claim 8 or 9, wherein the first information further comprises information indicating the first channel.

11. The method according to any one of claims 8 to 10, wherein the receiving the second information comprises:
receiving the second information on the first channel.

12. The method according to any one of claims 8 to 11, wherein the second information further indicates one or more of the following information:
identification information of the second channel, channel occupancy time of the second channel, or a transmission participant corresponding to the second channel.

13. The method according to any one of claims 8 to 11, wherein one or more of identification information of the second channel, channel occupancy time of the second channel, or a transmission participant corresponding to the second channel are predefined in a protocol.

14. The method according to any one of claims 8 to 13, wherein before the sending the first information to the first device on the first channel, the method further comprises:
receiving third information from the first device, wherein the third information indicates a capability of the first device to support switching from the first channel to the second channel for transmission.

15. The method according to claim 14, wherein the third information further indicates one or more of the following information:
at least one second channel supported by the first device, or time information for the first device to support switching from the first channel to the second channel for transmission.

16. A communication apparatus, comprising a unit or a module configured to perform the method according to any one of claims 1 to 7, or comprising a unit or a module configured to perform the method according to any one of claims 8 to 15.

17. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 7 or the method according to any one of claims 8 to 15 by using a logic circuit or by executing code instructions.

18. A computer-readable storage medium, wherein the storage medium stores a computer program or instructions; and when the computer program or the instructions are executed by a communication apparatus, the method according to any one of claims 1 to 7 is implemented, or the method according to any one of claims 8 to 15 is implemented.

19. A computer program product, comprising computer program code, wherein when the computer program code is run on a computer, the method according to any one of claims 1 to 7 is implemented, or the method according to any one of claims 8 to 15 is implemented.
